# EUROPÄISCHE PATENTSCHRIFT

(11) **EP 0 277 338 B1**
(45) Veröffentlichungstag und Bekanntmachung des Hinweises auf die Patenterteilung: **19.10.1994**
(21) Anmeldenummer: 87118939.5
(22) Anmeldetag: 21.12.1987
(51) Int. Cl.: H01S 3/03

(54) **Aerodynamische Fenstereinrichtung**
Aerodynamic window
Fenêtre aérodynamique

(30) Priorität: 22.01.1987 DE 3701718
(43) Veröffentlichungstag der Anmeldung: 10.08.1988
(73) Patentinhaber: Deutsche Forschungsanstalt für Luft- und Raumfahrt e.V., 51126 Köln (DE)
(72) Erfinder: Wildermuth, Eberhard, D-7012 Fellbach (DE); Hügel, Helmut, Prof. Dr.-Ing., D-7032 Sindelfingen (DE)
(74) Vertreter: Hoeger, Stellrecht & Partner

(56) Entgegenhaltungen:
- US-A- 3 873 939
- US-A- 3 973 218
- R.N. Guile, AIAA PAPER 75-122, 1975, "Investigation of a free-vortex aerodynamic window"

## Beschreibung

Die Erfindung betrifft eine aerodynamische Fenstereinrichtung für einen Laser zur Druckabschirmung der Laserkavität und zur Auskopplung des Laserstrahls, umfassend eine Strahldüse, einen dieser gegenüberliegenden Diffusor zur Erzeugung eines von der Strahldüse zum Diffusor verlaufenden und eine Auskoppelöffnung überdeckenden Freistrahls, wobei einem vorgegebenen Freistrahl eine zu erreichende Druckdifferenz zugeordnet ist, und eine der Laserkavität abgewandte Seitenwand des Diffusors, welche relativ zu einer Freistrahlrichtung justierbar ist.

Ferner betrifft die Erfindung ein Verfahren zur Druckabschirmung einer Laserkavität mittels einer aerodynamischen Fenstereinrichtung zum Auskoppeln des Laserstrahls, wobei die aerodynamische Fenstereinrichtung eine Strahldüse, einen dieser gegenüberliegenden Diffusor zur Erzeugung eines von der Strahldüse zum Diffusor verlaufenden und eine Auskoppelöffnung überdeckenden Freistrahls und eine justierbare, der Laserkavität abgewandte Seitenwand des Diffusors aufweist, und wobei ein Freistrahl vorgegeben und diesem durch Berechnung eine zu erreichende Druckdifferenz zugeordnet wird.

Bei Lasern, insbesondere bei Hochenergielasern, besteht das Problem, daß der aus der Laserkavität ausgekoppelte Laserstrahl aus dieser durch ein Fenster herausgeführt werden muß, welches die Laserkavität gegenüber der Umgebungsatmosphäre abschirmt, da in der Laserkavität typischerweise ein Druckniveau von ungeführ 100 mbar herrscht.

Bisher wurden zur Auskopplung des Laserstrahls materielle Fenster verwendet, die jedoch bei hohen Laserleistungen den Anforderungen nicht genügen, da sie aufgrund ihrer Absorption erwärmt und somit verformt oder gar zerstört werden.

Aus diesem Grund wurden bereits in mehreren Veröffentlichungen aerodynamische Fenster als Ersatz für materielle Fenster bei der Auskopplung des Laserstrahls aus der Laserkavität diskutiert. Eines der erfolgversprechendsten Konzepte ist das "Free-Vortex Aerodynamic Window", das eine Strahldüse aufweist, die dem die Auskoppelöffnung übergreifenden Freistrahl eine Geschwindigkeitsverteilung eines freien Wirbels aufprägt.

Die Dimensionierung eines derartigen aerodynamischen Fensters hat ausgehend von dem in der Laserkavität vorgesehenen Druckniveau zu erfolgen und läßt keine Variationen zu. Somit muß bei einem einmal konzipierten aerodynamischen Fenster die Laserkavität stets exakt auf dem Druckniveau gehalten werden, für das das aerodynamische Fenster konzipiert wurde. Ansonsten tritt ein Leckstrom auf, welcher entweder zum Einströmen von Umgebungsatmosphäre in die Laserkavität oder zum Ausströmen von Lasergas führt. Im ersteren Fall wird das Lasergas mit Umgebungsluft verunreinigt, was zu einer drastischen Verringerung der Laserleistung führt, im letzteren Fall wird teueres Lasergas verloren und muß nachgefüllt werden. Abgesehen von diesen Nachteilen ist es außerdem oftmals wünschenswert, um den Laser bei verschiedenen Betriebszuständen optimal betreiben zu können, auch das Druckniveau in der Laserkavität zu variieren.

Aerodynamische Fenstereinrichtungen sind aus der Druckschrift von R.N. Guile, AIAA Paper 75-122, 1975, "Investigation of a free-vortex aerodynamic window" bekannt. Diese Druckschrift offenbart zwar ein aerodynamisches Fenster, bei welchem die der Laserkavität abgewandte Seitenwand des Diffusors verstellbar ist, die Verstellbarkeit der Seitenwand dient gemäß der Druckschrift lediglich dazu, eine Justiermöglichkeit zu schaffen, um die mit dem Freistrahl mitgenommene Luft ohne Beeinträchtigung der Funktion des aerodynamischen Fensters einzufangen.

In dem Abschnitt "Operating Pressure Ratio" dieser Druckschrift, insbesondere Absatz zwei dieses Abschnitts (Kapitel IV) ist dargelegt, daß eine Möglichkeit besteht, dieses "Operating Pressure Ratio" zu ändern und somit zwangsläufig auch eine Abschirmung unterschiedlicher Druckniveaus möglich ist.

Allerdings wird gemäß dem Abschnitt "Operating Pressure Ratio" der Druck zur Erzeugung des Freistrahls ("Supplied Pressure") geändert, wie dies auch in Fig. 13 dargestellt ist.

Durch die Änderung dieses Drucks wird nach den Ausführungen in dem Abschnitt "Operating Pressure Ratio" auch eine Justierung der inneren Diffusorwand erforderlich, um das aerodynamische Fenster auf der isentropischen Kurve gemäß Fig. 13 betreiben zu können.

Das heißt nichts anderes, als daß bei Druckdifferenzen, die von den vorgesehenen Druckdifferenzen abweichen, eine Druckabschirmung durch Variation des Gasdrucks zur Erzeugung des Freistrahls erfolgt und daß aus Gründen der optischen Qualität des aerodynamischen Fensters ein sogenanntes "off-design" erforderlich ist, das heißt also eine Verschiebung der inneren Seitenwand (siehe letzter Absatz des Abschnitts "Operating Pressure Ratio").

Dasselbe ist in dem Kapitel III mit der Überschrift "Test model" ausgeführt. Insbesondere wird dort in dem vierten Absatz dieses Kapitels lediglich von einem "offset" der inneren Diffusorwand gesprochen und lediglich im letzten Absatz auch noch von einer Anpassung der Einlaßhöhe des Diffusors, wobei diese durch eine justierbare äußere Wand erfolgt. Dabei geht es lediglich darum, die von dem Freistrahl mitgenommene Luft ohne Beeinträchtigung der Funktion des aerodynamischen Fensters einzufangen.

Eine derartige Anpassung des aerodynamischen Fensters an unterschiedliche Druckdifferenzen ist sehr aufwendig.

Ausgehend von diesem Stand der Technik liegt der Erfindung die Aufgabe zugrunde, ein aerodynamisches Fenster der gattungsgemäßen Art derart zu verbessern, daß dieses eine möglichst einfache variable Einstellung eines Druckniveaus in der Laserkavität erlaubt.

Diese Aufgabe wird bei einer aerodynamischen Fenstereinrichtung der eingangs beschriebenen Art erfindungsgemäß dadurch gelöst, daß zur Justierung der Seitenwand oder deren Teilbereiche Einstellglieder vorgesehen sind, daß die Einstellglieder mit Betätigungseinrichtungen versehen sind und daß eine Steuerung für die Betätigungseinrichtungen vorgesehen ist, welche über diese bei von der dem vorgegebenen Freistrahl zugeordneten zu erreichenden Druckdifferenz abweichendem Druckniveau in der Laserkavität die Druckabschirmung der Laserkavität durch die Justierung zumindest von Teilbereichen der der Laserkavität abgewandten Seitenwand des Diffusors wieder einstellt.

Durch diese Justierbarkeit der Seitenwand des Diffusors läßt sich das in der Laserkavität herrschende Druckniveau variieren, so daß bei Drucken innerhalb einer gewissen Variationsbreite ein unerwünschter Leckstrom durch Nachjustierung der Seitenwand des Diffusors mittels der Steuerung unterbunden werden kann.

Ein einfaches Ausführungsbeispiel der aerodynamischen Fenstereinrichtung sieht vor, daß die gesamte Seitenwand als Ganzes justierbar ist.

Bei einem weiteren Ausführungsbeispiel kann vorgesehen sein, daß eine eintrittsseitig angeordnete Diffusorlippe der Seitenwand justierbar ist, wobei es ebenfalls im Rahmen der Erfindung liegt, wenn die Diffusorlippe allein oder gemeinsam mit der gesamten Seitenwand justierbar ist.

Schließlich kann es ebenfalls noch von Vorteil sein, wenn ein austrittsseitiger Teilbereich der Seitenwand justierbar ist, mit welchem ein Strömungsverlauf im Diffusor selbst beeinflußbar ist.

Bei den bisherigen Ausführungsbeispielen der erfindungsgemäßen aerodynamischen Fenstereinrichtung wurde nicht festgelegt, ob eine der beweglichen Seitenwand gegenüberliegende, der Laserkavität zugewandte Seitenwand ebenfalls justierbar sein soll oder nicht. Ein einfaches Ausführungsbeispiel, bei dem dennoch die erfindungsgemäßen Vorteile eintreten, sieht vor, daß eine der Laserkavität zugewandte Seitenwand relativ zur Freistrahlrichtung stationär ist.

Soweit bisher von Justierbarkeit die Rede war, ist darunter sowohl eine Parallelverschiebung als auch eine Verkippung der Seitenwand oder deren Teilbereiche zu verstehen. Da sich eine Höhe des Diffusors, d.h. ein Abstand der beweglichen Seitenwand von der der Laserkavität zugewandten Seitenwand im voraus recht gut bestimmen läßt und nur in geringerem Maße zur Einstellbarkeit des Druckniveaus in der Laserkavität beiträgt, ist bei einem möglichst einfachen und dennoch in ausreichendem Maße justierbaren Ausführungsbeispiel der erfindungsgemäßen aerodynamischen Fenstereinrichtung vorgesehen, daß die justierbare Seitenwand oder deren Teilbereiche relativ zur Freistrahlrichtung verkippbar sind.

Alternativ oder ergänzend zu der vorstehend beschriebenen Verkippung ist es ebenfalls denkbar, wenn die justierbare Seitenwand oder deren Teilbereiche ungefähr parallel zur Freistrahlrichtung verschiebbar sind. Da die Freistrahlrichtung quer zu einer Längsmittelachse des Auskoppelkanals verläuft, ist folglich unter der geschilderten Verschiebbarkeit der Seitenwand oder deren Teilbereiche eine Verschiebbarkeit quer zur Längsmittelachse des Auskoppelkanals zu verstehen.

In vielen Fällen hat es sich als zweckmäßig erwiesen, wenn die justierbare Seitenwand oder deren Teilbereiche ungefähr senkrecht zu der Längsmittelachse des die Auskoppelöffnung bildenden Auskoppelkanals verschiebbar ist.

Bei einem der vorstehend beschriebenen Ausführungsbeispiele wurde davon ausgegangen, daß die Diffusorlippe justierbar ist. Dies erfordert jedoch eine aufwendige Konstruktion, so daß vorteilhafterweise die gesamte Seitenwand bei feststehender Diffusorlippe justierbar sein soll. In diesem Fall ist es jedoch zweckmäßig wenn die Diffusorlippe der justierbaren Seitenwand in Richtung auf die der Laserkavität zugewandte Seitenwand umgebogen ist, da dies einen günstigeren Strömungsverlauf im Diffusor erlaubt und auch die Justiereigenschaften eines derartigen Diffusors verbessert.

Für die Justierung der Seitenwand oder deren Teilbereiche hat es sich als zweckmäßig erwiesen, wenn Einstellglieder vorgesehen sind. Hierbei handelt es sich vorteilhafterweise um linear verstellbare Einstellglieder.

Die Einstellglieder können grundsätzlich in jeder Richtung zueinander angeordnet sein. Ein zweckmäßiges Ausführungsbeispiel sieht vor, daß die Einstellglieder parallel zueinander angeordnet sind. Eine noch bessere Justierbarkeit der Seitenwand oder deren Teilbereiche läßt sich jedoch dadurch erreichen, daß die Einstellglieder ungefähr in einem rechten Winkel zueinander angeordnet sind.

Insbesondere im letzteren Fall ist es nützlich, wenn die Seitenwand oder deren Teilbereich an einem der Einstellglieder gelenkig und an dem anderen gelenkig und querverschiebbar gehalten sind, so daß durch die Verstellung eines Einstellglieds die Seitenwand verkippbar und durch die Verstellung des jeweils anderen Einstellglieds die Innenwand linear verschiebbar ist. Hierbei hat sich besonders ein Ausführungsbeispiel bewährt, bei welchem ein erstes Einstellglied ungefähr parallel zur Längsmittellinie des Auskoppelkanals und ein zweites Einstellglied quer, insbesondere ungefähr im rechten Winkel zu diesem angeordnet sind und bei dem Seitenwand oder deren Teilbereiche am ersten Einstellglied gelenkig und querverschiebbar und am zweiten Einstellglied gelenkig gehalten sind.

Eine besonders einfache Möglichkeit zur Verstellung der Seitenwand sieht vor, daß die Einstellglieder Einstell- oder Mikrometerschrauben sind.

Bei Verwendung solcher Einstellschrauben ist es günstig, wenn die Einstellschrauben kugelförmig ausgebildete Druckstücke aufweisen, die in kugelförmige Ausnehmungen der justierbaren Teilbereiche der Seitenwand eingreifen, um eine bei der Justierung auftretende Verkippung der Teilbereiche relativ zu den Druckstücken der Einstellschrauben in einfacher Weise ausgleichen zu können.

Eine Justierung der Seitenwand oder deren Teilbereiche durch Parallelverschiebung oder Verkippung ist in besonders einfacher Weise dann möglich, wenn die justierbare Seitenwand oder jeder justierbare Teilbereich mittels zwei in Stromrichtung an entgegengesetzten Enden von diesen angreifenden Einstellschrauben beweglich gelagert ist.

Besonders zweckmäßig ist es, wenn die Steuerung eine Nachjustierung der Seitenwand oder deren Teilbereiche bei Auftreten eines unerwünschten Leckstroms vornimmt.

Besonders einfach läßt sich für die Steuerung ein Leckstrom dann feststellen, wenn der Steuerung ein kavitätsseitig nahe der Auskoppelöffnung angeordneter Drucksensor und ein im Bereich der Laserkavität liegender Drucksensor zugeordnet sind, welche im Falle eines Leckstroms einen Druckunterschied anzeigen und somit für die Steuerung einen Leckstrom erkennbar machen.

Eine vorteilhafte Alternative zur Steuerung mittels Drucksensoren sieht bei einem weiteren Ausführungsbeispiel vor, daß zur Steuerung des Druckniveaus ein kavitätsseitig nahe der Auskoppelöffnnung angeordneter Gasströmungssensor vorgesehen ist.

Bei diesem Gasströmungssensor handelt es sich zweckmäßigerweise um ein thermisches Anemometer.

Bei all den beschriebenen Steuerungen wäre es grundsätzlich vorstellbar, das Druckniveau des aerodynamischen Fensters so einzustellen, daß kein Gas aus der Laserkavität austritt und kein Gas von außen in die Laserkavität eintritt. Aus Sicherheitsgründen ist es jedoch vorteilhafter, wenn die Steuerung auf einen vorwählbaren minimalen Leckstrom regelt, da bei dieser Art der Steuerung sichergestellt ist, daß kein Gas von außen in die Laserkavität eintritt und die geringen Verluste von Lasergas hingenommen werden können. Hierzu eignet es sich besonders, wenn eine Steuerung über den Gasströmungssensor erfolgt, da dieser wesentlich empfindlicher als die Drucksensoren in der Lage ist, einen aus der Laserkavität austretenden minimalen Gasstrom zu detektieren.

Die eingangs genannte Aufgabe wird ferner bei einem Verfahren der eingangs genannten Art erfindungsgemäß dadurch gelöst, daß bei von der berechneten Druckdifferenz abweichendem Druckniveau in der Laserkavität und bei dem vorgegebenen Freistrahl zum Einstellen der Druckabschirmung die der Laserkavität abgewandte Seitenwand des Diffusors zumindest in Teilbereichen relativ zu der Freistrahlrichtung justiert wird.

Dieses Verfahren hat den großen Vorteil, daß es eine einfache Anpassung der aerodynamischen Fenstereinrichtung an unterschiedliche Druckniveaus in der Laserkavität erlaubt.

Dieses Verfahren kann manuell oder automatisch oder zumindest ferngesteuert durchgeführt werden.

Vorteilhafte Ausgestaltungen des Verfahrens sind Gegenstand der Unteransprüche 22 bis 29.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: eine teilweise aufgebrochene schematische Darstellung eines Lasers mit einem ersten Ausführungsbeispiel einer aerodynamischen Fenstereinrichtung;
- Fig. 2: einen vergrößerten Schnitt durch das erste Ausführungsbeispiel der aerodynamischen Fenstereinrichtung gemäß Fig. 1;
- Fig. 3: einen Schnitt entsprechend Fig. 2 durch ein zweites Ausführungsbeispiel der aerodynamischen Fenstereinrichtung und
- Fig. 4: einen Schnitt entsprechend Fig. 2 durch ein drittes Ausführungsbeispiel der aerodynamischen Fenstereinrichtung.
- Fig. 5: einen Schnitt ähnlich Fig. 2 durch ein viertes Ausführungsbeispiel der aerodynamischen Fenstereinrichtung und
- Fig. 6: einen Schnitt ähnlich Fig. 4 durch ein fünftes Ausführungsbeispiel der aerodynamischen Fenstereinrichtung.

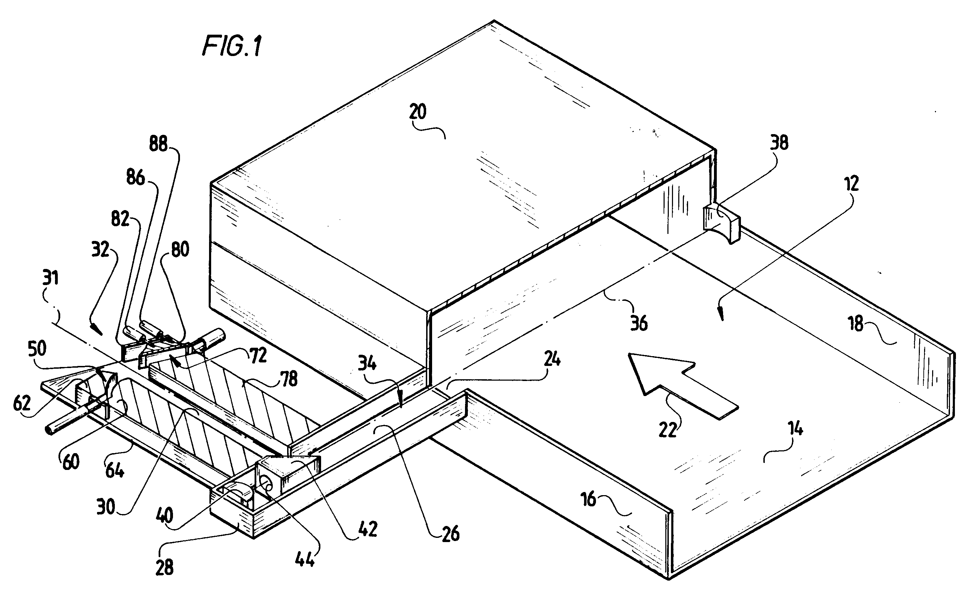

Ein Gaslaser mit einer erfindungsgemäßen Auskoppeleinrichtung in Fig. 1 zeigt im einzelnen einen Gaskanal 12, welcher aus einem Bodenteil 14, zwei Seitenteilen 16 und 18 sowie einem Deckel 20 gebildet ist. Dieser Gaskanal 12 wird in Richtung des Pfeils 22 von angeregtem Lasergas durchströmt.

Von einer Öffnung 24 im Seitenteil 16 weg erstreckt sich in ungefähr senkrecht auf dem Seitenteil 16 stehender Richtung ein Seitenkanal 26, welcher an seinem der Öffnung 24 entgegengesetzten Ende mittels einer Rückwand 28 verschlossen ist. An diesem Seitenkanal 26 schließt sich ein von diesem ungefähr im rechten Winkel wegführender Auskoppelkanal 30 mit einer Längsmittelachse 31 an, welcher an seinem dem Seitenkanal 26 abgewandten Ende ein aerodynamisches Fenster 32 trägt.

Quer zu dem Gaskanal 12 und in Längsrichtung des Seitenkanals 26 erstreckt sich eine Laserkavität 34 längs einer Resonatorachse 36, zu welcher konzentrisch an dem Seitenteil 18 ein erster Resonatorspiegel 38 und an der Rückwand 28 des Seitenkanals 26 ein zweiter Resonatorspiegel 40 justierbar angeordnet sind. Des weiteren umfaßt die Laserkavität 34 noch einen vor dem zweiten Resonatorspiegel 40 angeordneten Auskoppelspiegel 42, welcher ebenfalls konzentrisch zur Resonatorachse 36, gegenüber dieser jedoch um 45° geneigt ist, so daß er zur Resonatorachse 36 ungefähr parallele Strahlen in den Auskoppelkanal 30 reflektiert. Der Auskoppelspiegel 42 besitzt einen mittigen Druchbruch 44, welcher zur Resonatorachse parallele und zu dieser bis zu einem gewissen Mindestabstand verlaufende Laserstrahlen zu dem zweiten Resonatorspiegel 40 durchtreten läßt. Der Resonator, umfassend die Resonatorspiegel 38 und 40, arbeitet als optisch instabiler Resonator, d.h. der erste Resonatorspiegel 38 weist eine konkave Krümmung auf, während der zweite Resonatorspiegel 40 eine konvexe Krümmung aufweist,und beide Krümmungen sind so aufeinander abgestimmt, daß zunächst im Bereich der Resonatorachse entstehende Laserstrahlen mehrfach zwischen den Resonatorspiegeln 38 und 40 hin- und herreflektiert werden und dabei sich zunehmend von der Resonatorachse 36 entfernen, solange bis sie nicht mehr durch den Durchbruch 44 hindurchtreten können, sondern auf den Auskoppelspiegel 42 treffen, der diese in den Auskoppelkanal 30 reflektiert, von wo aus sie durch das aerodynamische Fenster 32 austreten.

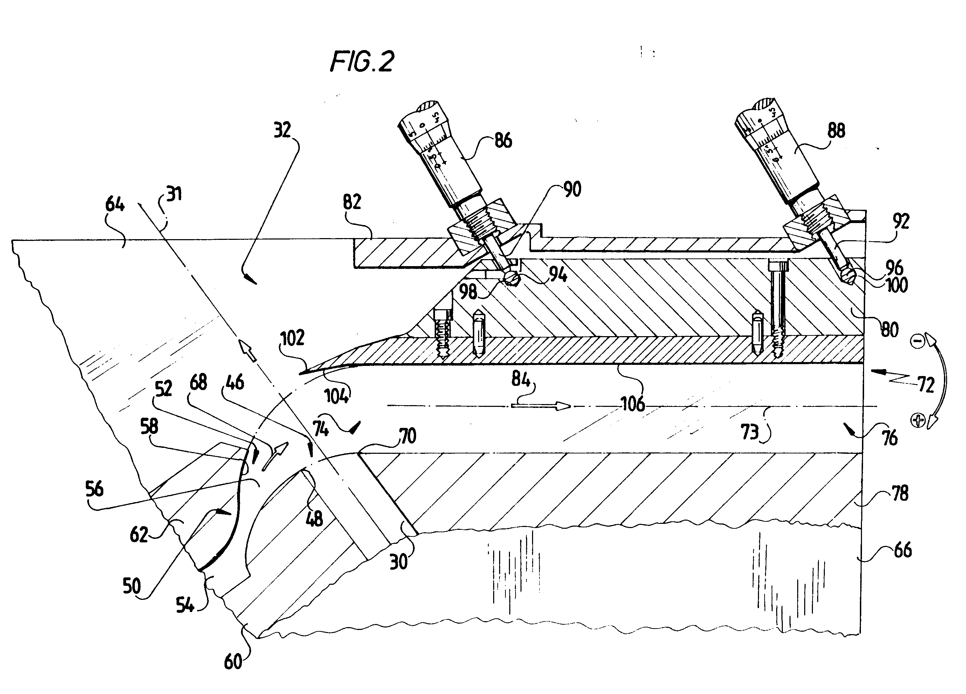

Das aerodynamische Fenster 32, vergrößert dargestellt in Fig. 2, umfaßt im einzelnen eine im Querschnitt rechteckförmige Austrittsöffnung 46, an deren eine Seitenkante 48 sich eine Strahldüse 50 mit ihrer Strahlöffnung 52 anschließt, wobei sich die Strahlöffnung 52 über die gesamte Breite der Seitenkante 48 erstreckt.

Die Strahldüse 50 umfaßt einen Gaszuführkanal 54, an welchen sich eine Lavaldüse 56 anschließt, welche einen darauffolgenden Düsenkrümmer 58 mit einer parallelen Überschallströmung trägt. Der Düsenkrümmer 58 endet mit der bereits beschriebenen Strahlöffnung 52. Eine derartige Strahldüse 50 prägt einem aus deren Strahlöffnung 52 austretenden Freistrahl eine Geschwindigkeitsverteilung des freien Wirbels auf, so daß der Freistrahl in Richtung der Austrittsöffnung 46 gekrümmt ist. Diesem Frei-Strahl wird im Bereich der Strahlöffnung eine Freistrahlrichtung 68 zugeordnet, welche ungefähr senkrecht auf der Längsmittelachse 31 des Auskoppelkanals 30 steht.

Sowohl der Gaszuführkanal 54 als auch die Lavaldüse 56 und der Düsenkrümmer 58 werden durch zwei Düseneinsätze 60 und 62 gebildet, welche zwischen einer Grundplatte 64 und einer Abdeckplatte 66 liegen, welche ihrerseits auch den Auskoppelkanal 30 in den senkrecht zur Seitenkante 48 verlaufenden Bereichen begrenzen und daher einen Abstand voneinander aufweisen, der genau der Länge der Seitenkante 48 entspricht. Die Grundplatte 64 und die Abdeckplatte 66 bilden somit auch den Freistrahl parallel zu der durch den Pfeil 68 angegebenen Freistrahlrichtung begrenzende Seitenwände.

An eine der Seitenkante 48 gegenüberliegende Seitenkante 70 der Austrittsöffnung 46 schließt sich ein als Ganzes mit 72 bezeichneter Diffusor an, in welchen der die Austrittsöffnung 46 übergreifende Freistrahl durch eine der Strahlöffnung 52 zugewandte Eintrittsöffnung 74 einströmt. Der Diffusor 72 ist mit seiner Längsachse 73 in einem spitzen Winkel von <90° zur Längsmittelachse 31 des Auskoppelkanals 30 ausgerichtet.

Ein ebenfalls durch die Grundplatte 64 und die Abdeckplatte 66 begrenzter Diffusorkanal 76 wird auf seiner der Laserkavität 34 zugewandten Seite durch eine stationäre an der Grundplatte 64 und der Abdeckplatte 66 gehaltene Seitenwand 78 begrenzt, welche sich bündig an die Seitenkante 70 der Austrittsöffnung 46 anschließt.

Dieser gegenüberliegend, also der Laserkavität 34 abgewandt, ist eine bewegliche Seitenwand 80 vorgesehen, welche zwar mit der Grundplatte 64 und der Abdeckplatte 66 dichtend abschließt, jedoch zwischen diesen und relativ zur stationären Seitenwand 78 beweglich gelagert ist.

Diese bewegliche Lagerung der Seitenwand 80 erfolgt über zwei, in Stromrichtung 84 des Diffusorkanals 76 gesehen, im Abstand voneinander angeordnete Mikrometerschrauben 86 und 88, welche ihrerseits an einer sich zwischen der Grundplatte 64 und der Abdeckplatte 66 erstreckenden und an diesen gehaltenen Tragplatte 82 montiert sind.

Diese Mikrometerschrauben 86 und 88 besitzen verstellbare Druckstücke 90 und 92, deren Enden mit Kugelköpfen 94 und 96 versehen sind. Diese Kugelköpfe greifen in die bewegliche Seitenwand 80 eingearbeitete kugelförmige Ausnehmungen 98 und 100 ein und bilden mit diesen zusammen eine gelenkige und mittels der Mikrometerschrauben 86 und 88 verstellbare Lagerung für die bewegliche Seitenwand 80. Die bewegliche Seitenwand 80 bildet mit ihrem im Bereich der Eintrittsöffnung 74 den Diffusorkanal 76 begrenzenden Wandbereich eine Diffusorlippe 102, welche mit einer den Diffusorkanal 76 begrenzenden Innenfläche 104 gegenüber einer Innenfläche 106 von in Längsrichtung 84 des Diffusorkanals 76 stromabwärts liegenden Randbereichen einen Winkel einschließt, welcher ungefähr 10° beträgt. Bei anderen Ausführungsbeispielen kann dieser Winkel jedoch auch zwischen 0 und 20° liegen.

Durch die Mikrometerschrauben 86 und 88 können somit die Innenflächen 104 und 106 der beweglichen Seitenwand 80 in Richtung der stationären Seitenwand 78 verstellt werden, wobei sowohl eine Verschiebung parallel zur stationären Seitenwand 78 als auch eine Verkippung möglich ist. Hierbei ist zu berücksichtigen, daß bei einer Verschiebung der beweglichen Seitenwand 80 in Richtung auf die stationäre Seitenwand 78 aufgrund der Tatsache, daß die Mikrometerschrauben 86 und 88 mit der Längsrichtung 84 des Diffusorkanals 76 einen Winkel kleiner als 90° einschließen, gleichzeitig mit einer Parallelverschiebung auch eine Verschiebung der Diffusorlippe 102 von der Strahldüse 50 weg erfolgt.

Die erfindungsgemäße aerodynamische Fenstereinrichtung funktioniert folgendermaßen:

Nach einem Anfahren deren aerodynamischen Fenstereinrichtung durch Zufuhr von unter Druck stehendem Gas über die Strahldüse 50, umfassend den Gaszuführkanal 54, die Lavaldüse 56 und den Düsenkrümmer 58 tritt aus der Strahlöffnung 52 der Strahldüse 50 ein Freistrahl mit der Freistrahlrichtung 68 aus. Dieser Freistrahl krümmt sich weiter über die Austrittsöffnung 46 und tritt in den Diffusor 72 ein, wobei bei diesem Ausführungsbeispiel die Lage der Längsachse 73 des Diffusorkanals sowie die Lage der stationären Seitenwand 78 entsprechend der durch den Freistrahl zu erreichenden Druckdifferenz zu berechnen sind. Zur Berechnung derartiger aerodynamischer Fensteranordnungen wird auf die Diplom-Arbeit von E.Wildermuth mit dem Titel "Auslegung und Untersuchung eines aerodynamischen Fensters für Hochenergielaser" am Institut für Raumfahrtantriebe der Universität Stuttgart, 1985 sowie die Veröffentlichung "Experimentals Study of Free-Vortex Aerodynamic Window" von W. W. Masuda und M. Yuasa in Journal de Physique 41, (1980) c9, S.422 bis 429 und "Analytical and Experimental Investigation of a Free-Vortex Supersonic Nozzle for Aerodynamic Windows" von R. N. Guile Ph. D. Thesis, The Univeristy of Connecticut 1974 verwiesen.

Beginnend mit einer Diffusorhöhe, d. h. einem Abstand der Innenfläche 106 von der stationären Seitenwand 78, welche ungefähr ein Vierfaches der Höhe der Strahlöffnung 52 beträgt, wird die bewegliche Seitenwand 80 mittels der Mikrometerschrauben 86 und 88 so lange zur stationären Seitenwand 78 parallelverschoben, bis das berechnete Druck-Auslegungsniveau im Niederdruckteil, d.h. der erwünschte Druck im Auskoppelkanal 30, auftritt. Ein Optimum der Diffusorhöhe liegt ungefähr bei einem Dreifachen der Höhe der Strahlöffnung 52.

Nach dieser exakten Einstellung der Diffursorhöhe kann durch Betätigung einer der Mikrometerschrauben 86 oder 88 eine Verkippung der beweglichen Seitenwand 80 herbeigeführt werden. Mit dieser Verkippung um einen Winkel weniger als plus/minus 10 Grad, ausgehend von einer zur stationären Seitenwand 78 parallelen Ausrichtung der beweglichen Seitenwand 80 ist beispielsweise beginnend bei einem Auslegungsdruck von 100 mbar in dem Auskoppelkanal 30 eine Variationsbreite von 75 mbar bis 200 mbar realisierbar, wobei die 75 mbar einer negativen Verkippung und die 200 mbar einer positiven Verkippung entsprechen.

Aufgrund der Verkippung der beweglichen Seitenwand 80 können somit Schwankungen des Druckniveaus in der Laserkavität ausgeglichen und auch eingeregelt werden, so daß das aerodynamische Fenster bei einer Veränderung des Drucks in der Laserkavität diese weiterhin ohne Leckstrom gegenüber der Umgebung abschirmt.

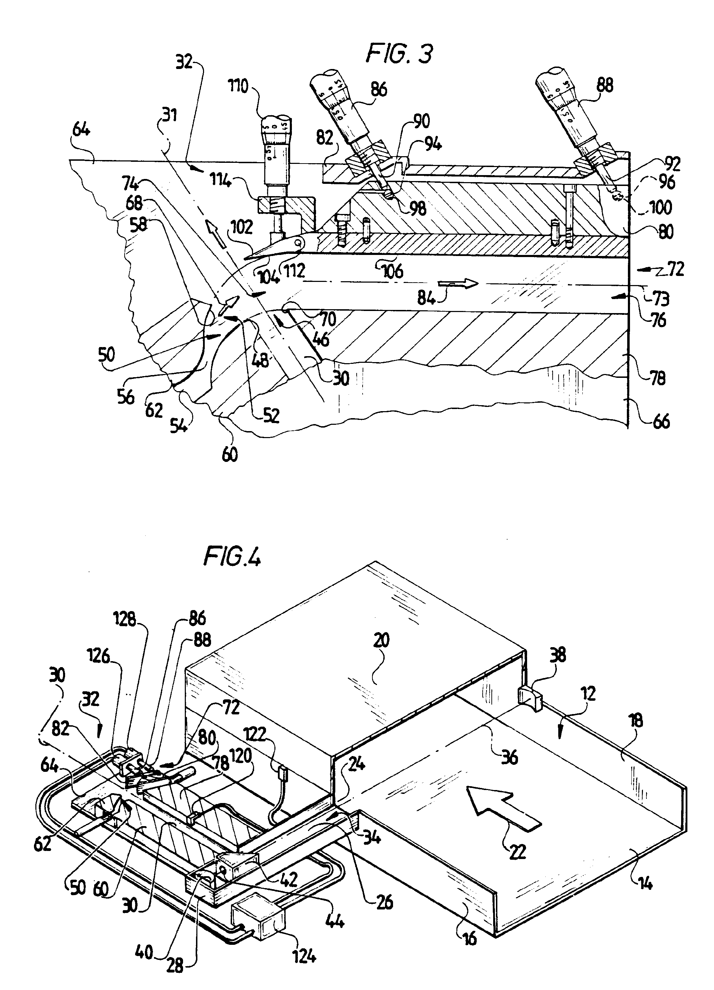

Bei einem zweiten Ausführungsbeispiel, dargestellt in Fig. 3, sind identische Teile mit denselben Bezugszeichen versehen und bezüglich dieser wird auf die Beschreibung des ersten Ausführungsbeispiels verwiesen.

Im Unterschied zum ersten Ausführungsbeispiel ist die Diffusorlippe 102 an der beweglichen Seitenwand 80 ihrerseits mittels eines Scharniers 112 beweglich gelagert und ebenfalls durch eine mittels eines Winkels 114 an der Seitenwand 80 gehaltene Mikrometerschraube 110 so verstellbar, daß die Innenfläche 104 gegenüber der Innenfläche 106 um einen Winkelbereich von 0 bis 20° geneigt einstellbar ist.

Da außerdem auch noch die Seitenwand 80 als Ganzes verstellbar ist, ist somit eine getrennte Verstellung der Innenfläche 104 der Diffusorlippe 102 und der Innenfläche 106 möglich, so daß letzteres auch einer Verstellung eines austrittsseitigen Teilbereichs der Seitenwand 80 entspricht.

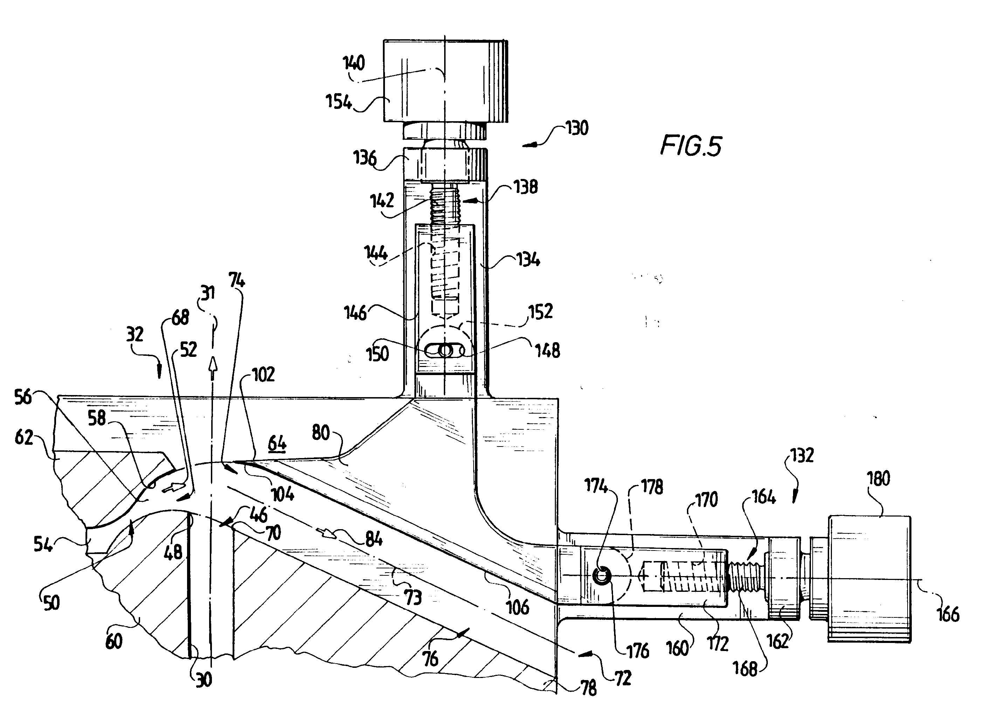

Bei einem dritten Ausführungsbeispiel, dargestellt in Fig. 4, sind ebenfalls mit dem ersten Ausführungsbeispiel identische Teile mit denselben Bezugszeichen versehen.

Im Gegensatz zum ersten Ausführungsbeispiel ist in dem Auskoppelkanal 30 nahe des aerodynamischen Fensters 32 ein erster Drucksensor 120 vorgesehen und in dem Gaskanal 12 ein zweiter Drucksensor 122 im Bereich der Seitenwand 16 montiert. Die beiden Drucksensoren 120 und 122 stehen mit einer Steuerung 124 in Verbindung, welche jeweils einen mit der Mikrometerschraube 86 und einen mit der Mikrometerschraube 88 verbundenen auf der Grundplatte 64 montierten Stellmotor 126 bzw. 128 entsprechend den in den Drucksensoren 120 und 122 gemessenen Drucken ansteuert. Sobald nun durch das aerodynamische Fenster 22 hindurch ein Leckstrom, sei es in Richtung der Laserkavität 34 oder aus dieser heraus auftritt, wird von den Drucksensoren 120 und 122 ein unterschiedlicher Druck gemessen. In diesem Fall ist die Steuerung 124 in der Lage, über die Stellmotoren 126 und 128 die bewegliche Seitenwand 80 des aerodynamischen Fensters 32 so lange nachzustellen, bis der Leckstrom unterbunden ist, d.h. von den Drucksensoren 120 und 122 derselbe Druck gemessen wird.

Bei einem vierten Ausführungsbeispiel, dargestellt in Fig.5, sind, insoweit als dieses dieselben Teile als die vorhergehenden Ausführungsbeispiele aufweist, dieselben Bezugszeichen verwendet. Bezüglich der Beschreibung dieser Teile wird auf die Ausführungen zu den vorstehenden Ausführungsbeispielen verwiesen.

Im Gegensatz zum ersten Ausführungsbeispiel, dargestellt in Fig. 2, ist die bewegliche Seitenwand 80 des Diffusors 72 durch zwei linear verschiebbare Einstellglieder 130 und 132 justierbar.

Das erste Einstellglied 130 umfaßt ein an die Grundplatte 64 angeformtes Basisteil 134, welches an seinem vorderen Ende einen sich von diesem Basisteil 134 erhebenden Lagerblock 136 aufweist. In diesem Lagerblock 136 ist eine Gewindespindel 138 drehbar, jedoch in Richtung ihrer Längsachse 140 unverschieblich gelagert. Die Gewindespindel 138 ist dabei so ausgerichtet, daß deren Längsachse 140 ungefähr parallel zur Längsmittelachse 31 des Auskoppelkanals 30 ausgerichtet ist. Mit ihrem auf der der Seitenwand zugewandten Seite des Lagerblocks 136 angeordneten Gewindeabschnitt 142 greift die Gewindespindel 138 in eine Bohrung 144 mit Innengewinde eines Stellteils 146 ein, welches an seinem vorderen, der Seitenwand 80 zugewandten Ende ein senkrecht zur Längsachse 140, jedoch parallel zum Basisteil 134 ausgerichtetes Langloch 148 trägt. Das Stellteil 146 ist durch die Gewindespindel 138 in Richtung von deren Längsachse 140 an dem Basisteil 134 verschieblich geführt.

In das Langloch 148 greift ein Bolzen 150 ein, welcher an einer an die Seitenwand 80 angeformten Führungslasche 152 gehalten ist, wobei die Führungslasche 152 das Stellteil 146 überlappend im Bereich des Langlochs 148 übergreift.

Auf ihrer dem Gewindeabschnitt 142 bezüglich des Lagerblocks 136 gegenüberliegenden Seite ist die Gewindespindel 138 antreibbar und vorzugsweise mit einem Stellmotor 154 verbunden, so daß mittels des Stellmotors 154 das Stellteil 146 in Richtung der Längsachse 140 auf den Diffusor 72 zu oder von diesem weg verschiebbar ist.

In gleicher Weise wie das Einstellglied 130 umfaßt auch das Einstellglied 132 ein an die Grundplatte 64 angeformtes Basisteil 160 mit einem endseitig angeordneten Lagerblock 162, welcher eine Gewindespindel 164 trägt, die mit ihrer Längsachse 166 ungefähr senkrecht zur Längsachse 140 und somit auch ungefähr senkrecht zur Längsmittelachse 31 des Auskoppelkanals 30 ausgerichtet ist.

Außerdem greift ein Gewindeabschnitt 168 in eine Bohrung 170 mit Innengewinde eines Stellteils 172, welches an seinem der Seitenwand 80 zugewandten Ende mit einer Lagerbohrung 174 versehen ist. In diese Lagerbohrung 174 greift ebenfalls ein Bolzen 176, welcher an einer Führungslasche 178 der Seitenwand 80 gehalten ist, die ebenfalls das Stellteil 172 übergreift.

In gleicher Weise wie die Gewindespindel 138 ist auch die Gewindespindel 134 durch einen dem Gewindeabschnitt 168 bezüglich des Lagerblocks 162 gegenüberliegend angeordneten Stellmotor 180 drehbar.

Dieses vierte Ausführungsbeispiel funktioniert nun folgendermaßen;

Wird die Gewindespindel 138 des ersten Einstellglieds 130 gedreht, so verschiebt sich das Stellteil 146 so daß über den in das Langloch 148 eingreifenden Bolzen 150 die Seitenwand 80 in Richtung der Seitenwand 78 um den sich in der Bohrung 174 drehenden Bolzen 176 gekippt wird. Damit bewegt sich die Diffusorlippe 102 auf diese Seitenkante 70 der Austrittsöffnung 46 zu, so daß insgesamt die Querschnittsfläche der Eintrittsöffnung 74 des Difussors 72 verkleinert wird. Damit ist eine Grobeinstellung des Druckniveaus in der Laserkavität 34 möglich.

Eine Feineinstellung erfolgt dagegen über Betätigung der Gewindespindel des zweiten Einstellglieds 132 mittels des Stellmotors 180, welche über das Stellteil 172 die Seitenwand 80 in Richtung der Längsmittelachse 31 des Auskoppelkanals 30 verschiebt, so daß die Diffusorlippe 102 einen geringeren oder größeren Abstand von der Längsmittelachse 31 aufweist. Die Verschiebung der Seitenwand 80 ist dadurch möglich, daß der Bolzen 150 in dem Langloch 148 des Stellteils 146 senkrecht zur Längsmittelachse 31 bewegbar ist. Durch diese Verstellbewegung der Gewindespindel 164 wird ebenfalls insgesamt die Querschnittsfläche der Eintrittsöffnung 74 verändert, jedoch in einem wesentlich geringeren Maße, wodurch eine Feineinstellung des mit dem aerodynamischen Fenster 32 erreichbaren Druckniveaus in der Laserkavität 34 möglich ist.

In Abwandlung dieses vierten Ausführungsbeispiels ist es jedoch ebenfalls möglich, die Seitenwand 80 von Hand zu verstellen. Hierzu sind die Stellmotoren 154 und 180 durch entsprechende handbetätigbare Stellräder zu ersetzen.

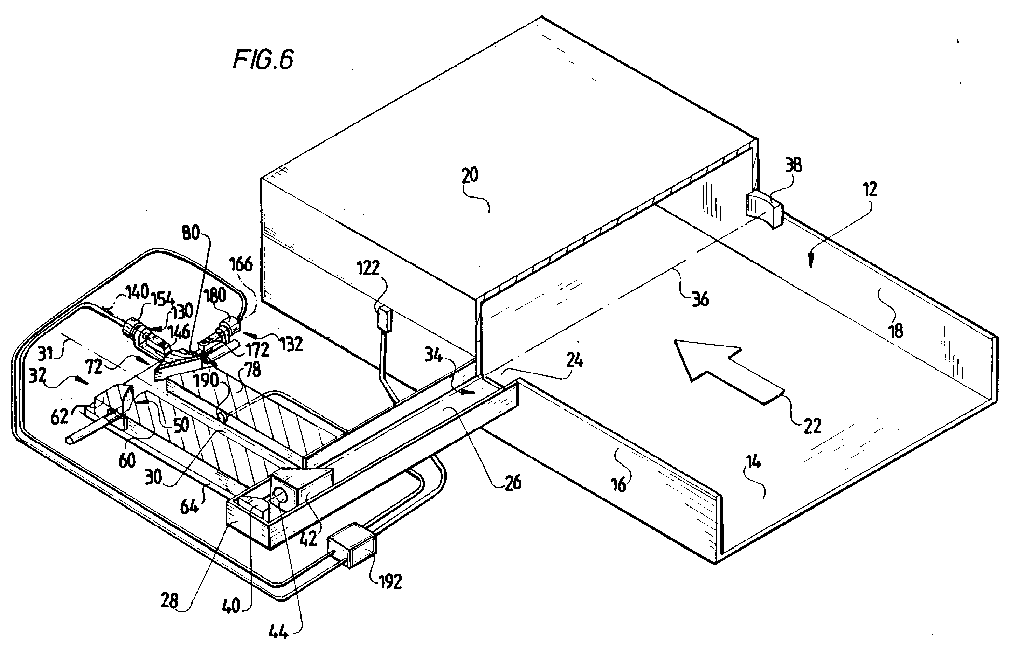

Ein fünftes Ausführungsbeispiel, dargestellt in Fig. 6, setzt das vierte Ausführungsbeispiel des aerodynamischen Fensters gemäß Fig. 5 zur automatischen Steuerung des Druckniveaus in der Laserkavität 34 ein. Mit den vorstehenden Ausführungsbeispielen identische Teile sind daher mit denselben Bezugszeichen versehen, so daß bezüglich deren Beschreibung auf die vorstehenden Ausführungen verwiesen werden kann.

Im Gegensatz zum dritten Ausführungsbeispiel findet beim fünften Ausführungsbeispiel nahe der Austrittsöffnung 46 des Laserstrahls kein Drucksensor Verwendung, sondern ein in den Auskoppelkanal 30 ragendes thermisches Anemometer 190, welches einen Gasstrom im Auskoppelkanal 30 in Richtung des aerodynamischen Fensters längs der Längsmittelachse 31 festzustellen in der Lage ist. Mit den von dem Anemometer 190 ermittelten Strömungswerten des Gasstroms ist die Steuerung 192 in der Lage, sowohl den Stellmotor 154 als auch den Stellmotor 180 zu betätigen, wobei große Strömungen zunächst zu einer Grobeinstellung mittels des Stellmotors 154 führen, während geringfügige Veränderungen dann über deren Stellmotor 180 nachgeregelt werden. Somit ist die Steuerung 192 in der Lage, einen Gasstrom zum Auskoppelkanal 30 in Richtung des aerodynamischen Fensters 32 auf ein Minimum zu regulieren, so daß zum einen ständig Lasergas die Laserkavität 34 verläßt, jedoch dieser "Leckstrom" auf ein Minimalniveau eingeregelt werden kann und folglich zum einen sichergestellt ist, daß keine Atmosphäre in die Laserkavität 34 eindringt, andererseits jedoch der Verlust an Lasergas möglichst gering gehalten werden kann.

Bei einem praktischen Ausführungsbeispiel der erfindungsgemäßen aerodynamischen Fenstereinrichtung wird die Steuerung des aerodynamischen Fensters so erfolgen, daß beim Anfahren des Lasers eine Druckmessung durch den Drucksensor 122 erfolgt und mit diesem die Druckjustierung über den Stellmotor 154 vorgenommen wird, wogegen während des Betriebs eine Strömungsmessung mittels des thermisch geregelten Anemometers erfolgt, welche zur Feinregelung über den Stellmotor 180 herangezogen wird.

## Patentansprüche

1. Aerodynamische Fenstereinrichtung für einen Laser zur Druckabschirmung der Laserkavität (34) und zur Auskopplung des Laserstrahls, umfassend eine Strahldüse (50), einen dieser gegenüberliegenden Diffusor (72) zur Erzeugung eines von der Strahldüse (50) zum Diffusor (72) verlaufenden und eine Auskoppelöffnung überdeckenden Freistrahls, wobei einem vorgegebenen Freistrahl eine zu erreichende Druckdifferenz zugeordnet ist, und eine der Laserkavität (34) abgewandte Seitenwand (80) des Diffusors (72), welche relativ zu einer Freistrahlrichtung (68) justierbar ist, **da****durch gekennzeichnet**, **daß** zur Justierung der Seitenwand (80) oder deren Teilbereiche (102) Einstellglieder (86, 88; 130, 132) vorgesehen sind, daß die Einstellglieder (86, 88; 130, 132) mit Betätigungseinrichtungen (125, 128; 154, 180) versehen sind und daß eine Steuerung (124; 192) für die Betätigungseinrichtungen (126, 128; 154, 180) vorgesehen ist, welche über diese bei von der dem vorgegebenen Freistrahl zugeordneten zu erreichenden Druckdifferenz abweichendem Druckniveau in der Laserkavität (34) die Druckabschirmung der Laserkavität (34) durch die Justierung zumindest von Teilbereichen der der Laserkavität (34) abgewandten Seitenwand (80) des Diffusors wieder einstellt.

2. Aerodynamische Fenstereinrichtung nach Anspruch 1, dadurch gekennzeichnet, daß die gesamte Seitenwand (80) justierbar ist.

3. Aerodynamische Fenstereinrichtung nach Anspruch 1 oder 2, dadurch gekennzeichnet, daß eine eintrittsseitig angeordnete Diffusorlippe (102) der Seitenwand (80) justierbar ist.

4. Aerodynamische Fenstereinrichtung nach einem der Ansprüche 1 bis 3, dadurch gekennzeichnet, daß ein austrittsseitiger Teilbereich der Seitenwand (80) justierbar ist.

5. Aerodynamische Fenstereinrichtung nach einem der Ansprüche 1 bis 4, dadurch gekennzeichnet, daß eine der Laserkavität (34) zugewandte Seitenwand (78) relativ zur Freistrahlrichtung (68) stationär ist.

6. Aerodynamische Fenstereinrichtung nach einem der Ansprüche 1 bis 5, dadurch gekennzeichnet, daß die justierbare Seitenwand (80) oder deren Teilbereiche (102) relativ zur Freistrahlrichtung (68) verkippbar sind.

7. Aerodynamische Fenstereinrichtung nach einem der voranstehenden Ansprüche, dadurch gekennzeichnet, daß die justierbare Seitenwand (80) oder deren Teilbereiche (102) ungefähr parallel zur Freistrahlrichtung (68) verschiebbar sind.

8. Aerodynamische Fenstereinrichtung nach einem der voranstehenden Ansprüche, dadurch gekennzeichnet, daß die justierbare Seitenwand (80) oder deren Teilbereiche (102) ungefähr senkrecht zu einer Längsmittelachse eines die Auskoppelöffnung (46) bildenden Auskoppelkanals (30) verschiebbar sind.

9. Aerodynamische Fenstereinrichtung nach einem der voranstehenden Ansprüche, dadurch gekennzeichnet, daß die Diffusorlippe (102) der justierbaren Seitenwand (80) in Richtung auf die der Laserkavität (34) zugewandte Seitenwand (78) umgebogen ist.

10. Aerodynamische Fenstereinrichtung nach einem der voranstehenden Ansprüche, dadurch gekennzeichnet, daß die Einstellglieder (86, 88; 130, 132) linear verstellbar sind.

11. Aerodynamische Fenstereinrichtung nach einem der voranstehenden Ansprüche, dadurch gekennzeichnet, daß die Einstellglieder (130, 132) ungefähr in einem rechten Winkel zueinander angeordnet sind.

12. Aerodynamische Fenstereinrichtung nach Anspruch 11, dadurch gekennzeichnet, daß die Seitenwand (80) oder deren Teilbereiche (102) an einem der Einstellglieder (132) gelenkig und an dem anderen (130) gelenkig und quer verschiebbar gehalten sind.

13. Aerodynamische Fenstereinrichtung nach einem der voranstehenden Ansprüche, dadurch gekennzeichnet, daß die Einstellglieder Einstellschrauben (86, 88) sind.

14. Aerodynamische Fenstereinrichtung nach Anspruch 13, dadurch gekennzeichnet, daß die Einstellschrauben (86, 88) kugelförmig ausgebildete Druckstücke (94, 96) aufweisen, die in kugelförmige Ausnehmungen (98, 100) der Seitenwand (80) oder deren Teilbereiche eingreifen.

15. Aerodynamische Fenstereinrichtung nach Anspruch 14, dadurch gekennzeichnet, daß die justierbare Seitenwand (80) oder jeder justierbare Teilbereich (102) mittels zwei in Stromrichtung an entgegegesetzten Enden von diesen angreifenden Einstellschrauben (86, 88) beweglich gelagert ist.

16. Aerodynamische Fenstereinrichtung nach einem der voranstehenden Ansprüche, dadurch gekennzeichnet, daß eine Steuerung (124; 192) eine Nachjustierung der Seitenwand (80) oder deren Teilbereiche (102) beim Auftreten eines unerwünschten Leckstroms vornimmt.

17. Aerodynamische Fenstereinrichtung nach Anspruch 16, dadurch gekennzeichnet, daß der Steuerung (124) ein kavitätsseitig nahe der Auskoppelöffnung (46) angeordneter Drucksensor (120) und ein im Bereich der Laserkavität (34) liegender Drucksensor (122) zugeordnet sind.

18. Aerodynamische Fenstereinrichtung nach Anspruch 16, dadurch gekennzeichnet, daß zur Steuerung (192) ein kavitätsseitig nahe der Auskoppelöffnung (46) angeordneter Gasströmungssensor (190) vorgesehen ist.

19. Aerodynamische Fenstereinrichtung nach Anspruch 18, dadurch gekennzeichnet, daß der Gasströmungssensor (190) ein thermisches Anemometer ist.

20. Aerodynamisches Fenster nach einem der Ansprüche 16 bis 19, dadurch gekennzeichnet, daß die Steuerung (192) auf einem vorwählbaren minimalen Leckstrom regelt.

21. Verfahren zur Druckabschirmung einer Laserkavität (34) mittels einer aerodynamischen Fenstereinrichtung (32) zum Auskoppeln des Laserstrahls, wobei die aerodynamische Fenstereinrichtung eine Strahldüse (50), einen dieser gegenüberliegenden Diffusor (72) zur Erzeugung eines von der Strahldüse (50) zum Diffusor (72) verlaufenden und eine Auskoppelöffnung überdekkenden Freistrahls und eine justierbare, der Laserkavität (34) abgewandte Seitenwand (80) des Diffusors (72) aufweist, und wobei ein Freistrahl vorgegeben und diesem durch Berechnung eine zu erreichende Druckdifferenz zugeordnet wird, dadurch gekennzeichnet, daß bei von der berechneten Druckdifferenz abweichendem Druckniveau in der Laserkavität (34) und bei dem vorgegebenen Freistrahl zum Einstellen der Druckabschirmung die der Laserkavität (34) abgewandte Seitenwand (80) des Diffusors (72) zumindest in Teilbereichen relativ zu der Freistrahlrichtung (68) justiert wird.

22. Verfahren nach Anspruch 21, dadurch gekennzeichnet, daß die gesamte Seitenwand (80) justiert wird.

23. Verfahren nach Anspruch 21 oder 22, dadurch gekennzeichnet, daß eine eintrittsseitig angeordnete Diffusorlippe (102) der Seitenwand (80) justiert wird.

24. Verfahren nach einem der Ansprüche 21 bis 23, dadurch gekennzeichnet, daß ein austrittsseitiger Teilbereich der Seitenwand (80) justiert wird.

25. Verfahren nach einem der Ansprüche 21 bis 24, dadurch gekennzeichnet, daß eine der Laserkavität (34) zugewandte Seitenwand (78) relativ zur Freistrahlrichtung (68) stationär gehalten wird.

26. Verfahren nach einem der Ansprüche 21 bis 25, dadurch gekennzeichnet, daß die justierbare Seitenwand (80) oder deren Teilbereiche (102) relativ zur Freistrahlrichtung (68) verkippt werden.

27. Verfahren nach einem der Ansprüche 21 bis 26, dadurch gekennzeichnet, daß die justierbare Seitenwand (80) oder deren Teilbereiche (102) ungefähr parallel zur Freistrahlrichtung (68) verschoben werden.

28. Verfahren nach einem der Ansprüche 21 bis 27, dadurch gekennzeichnet, daß die justierbare Seitenwand (80) oder deren Teilbereiche (102) ungefähr senkrecht zu einer Längsmittelachse eines die Auskoppelöffnung (46) bildenden Auskoppelkanals (30) verschoben werden.

29. Verfahren nach einem der Ansprüche 21 bis 28, dadurch gekennzeichnet, daß die Diffusorlippe (102) der justierbaren Seitenwand (80) in Richtung auf die der Laserkavität (34) zugewandte Seitenwand (78) umgebogen wird.

## Claims

1. Aerodynamic window for a laser for pressure-shielding the laser cavity (34) and for coupling out the laser beam, comprising a jet nozzle (50), a diffuser (72) located opposite thereto for generating a free jet extending from the jet nozzle (50) to the diffuser (72) and covering a coupling-out window, wherein a pressure difference to be achieved is allocated to a predetermined free jet, and a side wall (80) of the diffuser (72) facing away from the laser cavity (34) and being adjustable relative to a free jet direction (68), characterized in that adjusting elements (86, 88; 130, 132) are provided for adjusting the side wall (80) or its sections (102), that the adjusting elements (86, 88; 130, 132) are provided with actuating means (125, 128; 154, 180) and that a control (124; 192) is provided for the actuating means (126, 128; 154, 180), said control readjusting the pressure-shielding of the laser cavity (34) via said actuating means by adjusting at least sections of the side wall (80) of the diffuser facing away from the laser cavity (34) when the pressure level in the laser cavity (34) deviates from the pressure difference to be achieved which is allocated to the predetermined free jet.

2. Aerodynamic window as defined in claim 1, characterized in that the entire side wall (80) is adjustable.

3. Aerodynamic window as defined in claim 1 or 2, characterized in that a diffuser lip (102) arranged on the inlet side of the side wall (80) is adjustable.

4. Aerodynamic window as defined in any of claims 1 to 3, characterized in that a section of the side wall (80) on the outlet side is adjustable.

5. Aerodynamic window as defined in any of claims 1 to 4, characterized in that a side wall (78) facing the laser cavity (34) is stationary relative to the free jet direction (68).

6. Aerodynamic window as defined in any of claims 1 to 5, characterized in that the adjustable side wall (80) or its sections (102) are tiltable relative to the free jet direction (68).

7. Aerodynamic window as defined in any of the preceding claims, characterized in that the adjustable side wall (80) or its sections (102) are displaceable approximately parallel to the free jet direction (68).

8. Aerodynamic window as defined in any of the preceding claims, characterized in that the adjustable side wall (80) or its sections (102) are displaceable approximately perpendicularly to a longitudinal central axis of a coupling-out channel (30) forming the coupling-out opening (46).

9. Aerodynamic window as defined in any of the preceding claims, characterized in that the diffuser lip (102) of the adjustable side wall (80) is bent in the direction towards the side wall (78) facing the laser cavity (34).

10. Aerodynamic window as defined in any of the preceding claims, characterized in that the adjusting elements (86, 88; 130, 132) are adjustable linearly.

11. Aerodynamic window as defined in any of the preceding claims, characterized in that the adjusting elements (130, 132) are arranged approximately at right angles to one another.

12. Aerodynamic window as defined in claim 11, characterized in that the side wall (80) or its sections (102) are held on one of the adjusting elements (132) in an articulated manner and on the other (130) in an articulated and transversely displaceable manner.

13. Aerodynamic window as defined in any of the preceding claims, characterized in that the adjusting elements are adjusting screws (86, 88).

14. Aerodynamic window as defined in claim 13, characterized in that the adjusting screws (86, 88) have thrust members (94, 96) of a spherical design, said thrust members engaging in spherical recesses (98, 100) of the side wall (80) or its sections.

15. Aerodynamic window as defined in claim 14, characterized in that the adjustable side wall (80) or each adjustable section (102) is movably mounted by means of two adjusting screws (86, 88) engaging on opposite ends thereof in the direction of flow.

16. Aerodynamic window as defined in any of the preceding claims, characterized in that a control (124; 192) carries out a readjustment of the side wall (80) or its sections (102) when an undesired leakage flow occurs.

17. Aerodynamic window as defined in claim 16, characterized in that a pressure sensor (120) arranged in the vicinity of the coupling-out opening (46) on the cavity side and a pressure sensor (122) located in the region of the laser cavity (34) are associated with the control (124).

18. Aerodynamic window as defined in claim 16, characterized in that a gas flow sensor (190) arranged in the vicinity of the coupling-out opening (46) on the cavity side is provided for the control (192).

19. Aerodynamic window as defined in claim 18, characterized in that the gas flow sensor (190) is a thermal anemometer.

20. Aerodynamic window as defined in any of claims 16 to 19, characterized in that the control (192) regulates to a preselectable minimum leakage flow.

21. Process for pressure-shielding a laser cavity (34) by means of an aerodynamic window (32) for coupling out the laser beam, wherein the aerodynamic window comprises a jet nozzle (50), a diffuser (72) arranged opposite thereto for generating a free jet extending from the jet nozzle (50) to the diffuser (72) and covering a coupling-out opening, and an adjustable side wall (80) of the diffuser (72) facing away from the laser cavity (34), and wherein a free jet is predetermined and a pressure difference to be achieved allocated thereto by calculation, characterized in that with a pressure level in the laser cavity (34) deviating from the calculated pressure difference and with the predetermined free jet the side wall (80) of the diffuser (72) facing away from the laser cavity (34) is adjusted at least in sections relative to the free jet direction (68) for adjusting the pressure-shielding.

22. Process as defined in claim 21, characterized in that the entire side wall (80) is adjusted.

23. Process as defined in claim 21 or 22, characterized in that a diffuser lip (102) arranged on the inlet side of the side wall (80) is adjusted.

24. Process as defined in any of claims 21 to 23, characterized in that a section of the side wall (80) on the outlet side is adjusted.

25. Process as defined in any of claims 21 to 24, characterized in that a side wall (78) facing the laser cavity (34) is held stationary relative to the free jet direction (68).

26. Process as defined in any of claims 21 to 25, characterized in that the adjustable side wall (80) or its sections (102) are tilted relative to the free jet direction (68).

27. Process as defined in any of claims 21 to 26, characterized in that the adjustable side wall (80) or its sections (102) are displaced approximately parallel to the free jet direction (68).

28. Process as defined in any of claims 21 to 27, characterized in that the adjustable side wall (80) or its sections (102) are displaced approximately perpendicularly to a longitudinal central axis of a coupling-out channel (30) forming the coupling-out opening (46).

29. Process as defined in any of claims 21 to 28, characterized in that the diffuser lip (102) of the adjustable side wall (80) is bent in the direction towards the side wall (78) facing the laser cavity (34).

## Revendications

1. Dispositif à fenêtre aérodynamique pour laser en vue de la protection vis-à-vis de la pression de la cavité à laser (34) et du déclenchement du faisceau laser, comprenant une buse à jet (50), un diffuseur (72) face à celle-ci pour produire un jet libre allant de la buse à jet (50) jusqu'au diffuseur (72) et croisant une ouverture de sortie, un jet libre prédéterminé étant ainsi associé à une différence de pression à atteindre, et une paroi latérale (80) du diffuseur (72) qui est à l'opposé de la cavité à laser (34) et qui peut être réglée par rapport à la direction (68) du jet libre, caractérisé en ce que pour régler la paroi latérale (80) ou des zones partielles (102) de celle-ci sont prévus des éléments de réglage (86, 88; 130, 132), en ce que les éléments de réglage (86, 88; 130, 132) sont munis de dispositifs d'actionnement (125, 128; 154, 180), et en ce qu'une commande (124; 192) est prévue pour les dispositifs d'actionnement (126, 128; 154, 180) par lesquels, pour un niveau de la pression dans la cavité à laser (34) qui dévie de la différence de pression à atteindre qui est associé au jet libre prédéterminé, la protection vis-à-vis de la pression de la cavité à laser (34) est réglée à nouveau par le réglage au moins de zones partielles de la paroi latérale (80) du diffuseur qui est à l'opposé de la cavité à laser (34).

2. Dispositif à fenêtre aérodynamique selon la revendication 1, caractérisé en ce que l'ensemble de la paroi latérale (80) est réglable.

3. Dispositif à fenêtre aérodynamique selon la revendication 1 ou 2, caractérisé en ce qu'une lèvre de diffuseur (102) de la paroi latérale (80) qui est située du côté entrée est réglable.

4. Dispositif à fenêtre aérodynamique selon l'une quelconque des revendications 1 à 3, caractérisé en ce qu'un zone partielle de la paroi latérale (80) qui est située du côté sortie est réglable.

5. Dispositif à fenêtre aérodynamique selon l'une quelconque des revendications 1 à 3, caractérisé en ce qu'un paroi latérale (78) tournée vers la cavité à laser (34) est stationnaire par rapport à la direction (68) du jet libre.

6. Dispositif à fenêtre aérodynamique selon l'une quelconque des revendications 1 à 5, caractérisé en ce que la paroi latérale réglable (80) ou ses zones partielles (102) peuvent être basculées par rapport à la direction (68) du jet libre.

7. Dispositif à fenêtre aérodynamique selon l'une quelconque des revendications précédentes, caractérisé en ce que la paroi latérale réglable (80) ou ses zones partielles (102) peuvent être déplacées sensiblement parallèlement à la direction (68) du jet libre.

8. Dispositif à fenêtre aérodynamique selon l'une quelconque des revendications précédentes, caractérisé en ce que la paroi latérale réglable (80) ou ses zones partielles (102) peuvent être déplacées sensiblement perpendiculairement à l'axe longitudinal médian d'un canal de sortie (30) qui forme l'ouverture de sortie (46).

9. Dispositif à fenêtre aérodynamique selon l'une quelconque des revendications précédentes, caractérisé en ce que la lèvre de diffuseur (102) de la paroi latérale réglable (80) est incurvée en direction de la paroi latérale (78) qui est tournée vers la cavité à laser (34).

10. Dispositif à fenêtre aérodynamique selon l'une quelconque des revendications précédentes, caractérisé en ce que les éléments de réglage (86, 88; 130, 132) peuvent être déplacés linéairement.

11. Dispositif à fenêtre aérodynamique selon l'une quelconque des revendications précédentes, caractérisé en ce que les éléments de réglage (130, 132) sont disposés sensiblement à angle droit l'un par rapport à l'autre.

12. Dispositif à fenêtre aérodynamique selon la revendication 11, caractérisé en ce que la paroi latérale (80) ou ses zones partielles (102) sont maintenues de façon articulée sur l'un des éléments de réglage (132) et de façon articulée et mobile transversalement sur l'autre (130) des éléments de réglage.

13. Dispositif à fenêtre aérodynamique selon l'une quelconque des revendications précédentes, caractérisé en ce que les éléments de réglage sont constitués par des vis de réglage (86, 88).

14. Dispositif à fenêtre aérodynamique selon la revendication 13, caractérisé en ce que les vis de réglage (86, 88) comprennent des éléments de pression de forme sphérique (94, 96) qui pénètrent dans des évidements de forme sphérique (98, 100) de la paroi latérale (80) ou de ses zones partielles.

15. Dispositif à fenêtre aérodynamique selon la revendication 14, caractérisé en ce que la paroi latérale réglable (80) ou chaque zone partielle réglable (102) est montée de façon mobile au moyen de deux vis de réglage (86, 88) coopérant avec ces dernières aux extrémités opposées dans la direction de l'écoulement.

16. Dispositif à fenêtre aérodynamique selon l'une quelconque des revendications précédentes, caractérisé en ce qu'une commande (124; 192) effectue un nouveau réglage de la paroi latérale (80) ou de ses zones partielles (102) quand a lieu un courant de fuite indésirable.

17. Dispositif à fenêtre aérodynamique selon la revendication 16, caractérisé en ce qu'à la commande (124) sont associés un capteur de pression (120) disposé sur le côté de la cavité à proximité de l'ouverture de sortie (46) et un capteur de pression (122) disposé dans la zone de la cavité à laser (34).

18. Dispositif à fenêtre aérodynamique selon la revendication 16, caractérisé en ce qu'un capteur d'écoulement de gaz (190) destiné à la commande (192) est disposé sur le côté de la cavité à proximité de l'ouverture de sortie (46).

19. Dispositif à fenêtre aérodynamique selon la revendication 18, caractérisé en ce que le capteur d'écoulement de gaz (190) est un anémomètre thermique.

20. fenêtre aérodynamique selon l'une quelconque des revendications 16 à 19, caractérisée en ce que la commande (192) est réglée sur un courant de fuite minimal pouvant être sélectionné à l'avance.

21. Procédé pour établir une protection vis-à-vis de la pression d'une cavité à laser (34) au moyen d'un dispositif à fenêtre aérodynamique (32) pour déclencher le faisceau laser, le dispositif à fenêtre aérodynamique comprenant une buse à jet (50), un diffuseur (72) qui est à l'opposé de cette dernière pour produire un jet libre allant de la buse à jet (70) jusqu'au diffuseur (72) et croisant une ouverture de sortie, et une paroi latérale (80) du diffuseur (72) qui est réglable et est à l'opposé de la cavité à laser (34), et un jet libre étant prédéterminé et à celui-ci étant associée par calcul une différence de pression à atteindre, caractérisé en ce que pour régler la protection vis-à-vis de la pression à un niveau de pression différent de la différence de pression calculée dans la cavité à laser (34) et pour le jet libre prédéterminé la paroi latérale (80) du diffuseur (72) qui est à l'opposé de la cavité à laser (34) peut être réglée au moins dans des zones partielles par rapport à la direction (68) du jet libre.

22. Dispositif selon la revendication 21, caractérisé en ce que l'ensemble de la paroi latérale (80) peut être réglé.

23. Dispositif selon la revendication 23 ou 22, caractérisé en ce qu'une lèvre de diffuseur (102) de la paroi latérale (80) qui est disposée sur le côté entrée est réglable.

24. Dispositif selon l'une quelconque des revendications 21 à 23, caractérisé en ce qu'une zone partielle de la paroi latérale (80) qui est située du côté sortie est réglable.

25. Dispositif selon l'une quelconque des revendications 21 à 24, caractérisé en ce qu'une paroi latérale (78) tournée vers la cavité à laser (34) est maintenue relativement stationnaire par rapport à la direction (68) du jet libre.

26. Dispositif selon l'une quelconque des revendications 21 à 25, caractérisé en ce que la paroi latérale réglable (80) ou ses zones partielles (102) sont basculées par rapport à la direction (68) du jet libre.

27. Dispositif selon l'une quelconque des revendications 21 à 26, caractérisé en ce que la paroi latérale réglable (80) ou ses zones partielles (102) sont déplacées sensiblement parallèlement à la direction (68) du jet libre.

28. Dispositif selon l'une quelconque des revendications 21 à 27, caractérisé en ce que la paroi latérale réglable (80) ou ses zones partielles (102) sont déplacées sensiblement perpendiculairement à un axe longitudinal médian d'un canal de sortie (30) formant l'ouverture de sortie (46).

29. Dispositif selon l'une quelconque des revendications 21 à 28, caractérisé en ce que la lèvre de diffuseur (102) de la paroi latérale réglable (80) est incurvée en direction de la paroi latérale (78) qui est tournée vers la cavité à laser (34).
